# EUROPÄISCHE PATENTSCHRIFT

(11) **EP 4 352 291 B1**
(45) Veröffentlichungstag und Bekanntmachung des Hinweises auf die Patenterteilung: **14.10.2026**
(21) Anmeldenummer: 22729675.3
(22) Anmeldetag: 19.05.2022
(51) Int. Cl.: C09J 7/21, D03D 1/00, D03D 15/283, D03D 15/47, D03D 3/00, H01B 7/18

(54) **ABRIEBFESTES KABELWICKELBAND**
ABRASION-RESISTANT CABLE WINDING STRIP
BANDE D'ENROULEMENT POUR CÂBLE RÉSISTANT À L'ABRASION

(30) Priorität: 11.06.2021 DE 202021103182 U
(43) Veröffentlichungstag der Anmeldung: 17.04.2024
(73) Patentinhaber: Certoplast Technische Klebebänder GmbH, 42285 Wuppertal (DE)
(72) Erfinder: LEERMANN, Timo, 42369 Wuppertal (DE)
(74) Vertreter: Andrejewski - Honke Patent- und Rechtsanwälte Partnerschaft mbB
(86) Internationale Anmeldenummer: PCT/EP2022/063635
(87) Internationale Veröffentlichungsnummer: WO 2022/258344

(56) Entgegenhaltungen:
- EP-A1- 1 911 633
- WO-A1-2021/069174
- DE-U1- 202009 019 193
- DE-U1- 202016 102 083

## Beschreibung

Die Erfindung betrifft ein abriebfestes Kabelwickelband zum Ummanteln von Kabeln in Automobilen, mit einem Gewebeträger, und mit einer ein- oder beidseitig auf den Gewebeträger aufgebrachten Klebebeschichtung, wobei der Gewebeträger aus Filamentfäden auf Polyester- und/oder Polyamidbasis aufgebaut ist, wobei ferner die Filamentfäden als Einzelfäden eine jeweilige Fadenstärke von mindestens 280 dtex und im Falle von Mehrfachfilamentfäden eine kumulierte Fadenstärke von jeweils mindestens 280 dtex aufweisen, wobei weiter materialverschieden ausgebildete Mehrfachschuss-Filamentfäden realisiert sind, und wobei das Kabelwickelband wenigstens die Abriebklasse E gemäß LV 312 erfüllt.

Die Abriebfestigkeit von Klebebändern und insbesondere Kabelwickelbändern zum Ummanteln von Kabeln in Automobilen stellt eine wesentliche Eigenschaft solcher Kabelwickelbänder dar. Das lässt sich darauf zurückführen, dass solche Kabelwickelbänder mit Gewebeträger zahlreiche Zusatzfunktionen wie die Dämpfung von Klapper- oder Vibrationsgeräuschen bereits erfüllen. Darüber hinaus gewährleistet der Rückgriff auf Filamentfäden aus Kunststoff auf Basis von Polyester und/oder Polyamid einen dauerhaften Betrieb, weil derartige Kunststoffe für die automobilen Anwendungen über die nötige Temperaturbeständigkeit und auch Medienbeständigkeit verfügen. Kabelwickelbänder auf Basis von Gewebeträgern können darüber hinaus besonders abriebfest gestaltet werden.

Tatsächlich wird die Abriebbeständigkeit in der Prüfrichtlinie LV 312 in Anlehnung an DIN ISO 622 bestimmt, indem das Klebeband bzw. Kabelwickelband zunächst auf einen Dorn bzw. Metallstab mit 5 mm oder 10 mm aufgeklebt wird. Mit einem Schabwerkzeug, das einen Nadeldurchmesser von 0,45 mm aufweist, wird dann bei einer gleichzeitigen Belastung mit einer Gewichtskraft von 7 N die Anzahl der Hübe bestimmt, die benötigt wird, um das Klebeband durchzuscheuern. Das zuvor angegebene Normwerk in der Ausgabe Februar 2008 geht dabei auf die Firmen Audi, BMW, Daimler und VW zurück und unterscheidet dabei insgesamt die Abriebklassen A bis F nach folgenden Vorgaben:

**Tabelle: Einteilung der Abriebklassen nach LV 312 (Februar 2008)**

| | **Abriebklasse** | **Anforderung** |
|---|---|---|
| A | kein Abriebschutz | < 100 Hübe |
| B | geringer Abriebschutz | 100 - 499 Hübe |
| C | mittlerer Abriebschutz | 500 - 999 Hübe |
| D | hoher Abriebschutz | 1000 - 4999 Hübe |
| E | sehr hoher Abriebschutz | 5000 - 14999 Hübe |
| F | extrem hoher Abriebschutz | ≥ 15000 Hübe |

Im Stand der Technik nach der EP 1 911 633 A1 wird ein Kabelwickelband beschrieben, welches wenigstens die Abriebklasse E gemäß LV 312 erfüllt. Dazu wird auf einen Gewebeträger zurückgegriffen, der vollständig aus einem Polyamidwerkstoff gebildet ist und eine Garnstärke von mindestens 280 dtex aufweist. Außerdem wird an dieser Stelle durchgängig mit Garn aus 24 bis 80 Filamenten gearbeitet. Filamentfäden aus Polyamid gewährleisten bei dem bekannten Gewebeträger zwar eine hohe Abriebbeständigkeit. Allerdings sind Werkstoffe auf Polyamidbasis im Vergleich zu solchen auf beispielsweise Polyesterbasis relativ kostspielig.

Beim weiteren Stand der Technik nach der EP 2 157 147 B1 geht es ebenfalls um ein abriebfestes Kabelwickelband. Auch in diesem Fall kommt ein Gewebe aus Polyamid zum Einsatz. Zusätzlich wird gefordert, dass das Garn zur Herstellung der Fäden aus mindestens 90 Einzelfilamenten aufgebaut sein soll. Der Rückgriff auf 90 Einzelfilamente im Minimum führt neben der obligatorischen Verwendung von Polyamidwerkstoff zu einer weiteren Kostensteigerung.

Der nächstkommende Stand der Technik nach der WO 2021/069 174 A1 betrifft ein Klebeband und insbesondere Wickelband zum Ummanteln von Kabeln in Automobilen. Dieses verfügt über einen Gewebeträger mit einer ein- oder beidseitig auf den Gewebeträger aufgebrachten Klebebeschichtung. Der Gewebeträger ist ganz oder teilweise aus biobasierten Polymerfasern und/oder Polymerfäden gefertigt. Dabei kommen Mehrfachschussfäden und/oder Mehrfachkettfäden zum Einsatz. Beispielhaft kann sich der Gewebeträger aus Einfachkettfäden und Mehrfachschussfäden zusammensetzen. Die Mehrfachschussfäden verfügen über eine Fadenstärke von jeweils insbesondere 200 dtex und mehr. Weitere Details zum Aufbau der Mehrfachschussfäden finden keinen Niederschlag.

Durch die DE 20 2009 019 193 U1 ist schließlich ein Gewebeband und insbesondere Kabelwickelband bekannt geworden, bei dem die Schussfäden aus mehreren Einzelfäden gebildet werden, wobei der eine Einzelfaden eine Stärke von 220 dtex und der andere Einzelfaden eine Stärke von 330 dtex besitzt. Der Gewebeträger selbst ist mit einem Polyesterkettfaden und Polyamid-Schussfäden ausgerüstet.

Da es sich bei den abriebfesten Kabelwickelbändern des eingangs beschriebenen Aufbaus um Massenprodukte handelt, die vielfältig und in großer Zahl sowie zunehmend im Automobilbau eingesetzt werden, spielen auch geringste Fortschritte bei der Kostenreduktion eine erhebliche Rolle. Hier setzt die Erfindung an.

Der Erfindung liegt das technische Problem zugrunde, ein derartiges abriebfestes Kabelwickelband so weiterzuentwickeln, dass die Herstellungskosten bei gleichbleibender Performance reduziert sind.

Zur Lösung dieser technischen Problemstellung ist ein gattungsgemäßes abriebfestes Kabelwickelband im Rahmen der Erfindung dadurch gekennzeichnet, dass die Mehrfachschuss-Filamentfäden als kombinierte PET/PA-Mehrfachschuss-Filamentfäden oder als alternierende Mehrfachschuss-PET-Filamentfäden und Mehrfachschuss-PA-Filamentfäden ausgebildet sind, wobei entweder die Mehrfachschuss-Filamentfäden oder die Kett-Filamentfäden aus weniger als 80 Filamentfäden gebildet sind.

Die Erfindung greift also zunächst einmal auf eine gegenüber dem Stand der Technik nach der EP 2 157 147 B1 reduzierte Filamentanzahl zurück, so dass sich hierdurch bereits ein gewünschter Effekt zur Kostenreduktion einstellt. Denn entweder die Schuss-Filamentfäden oder die Kett-Filamentfäden verfügen über weniger als 80 Filamente.

Als Folge hiervon würde man gemäß dem Vergleichsbeispiel 4 in der EP 2 157 147 B1 eine verringerte Abriebfestigkeit erwarten. Das ist allerdings erfindungsgemäß nicht der Fall, weil nach wie vor wenigstens die Abriebklasse E nach der Normvorgabe LV 312 erreicht wird. Das lässt sich im Wesentlichen darauf zurückführen, dass lediglich eine Gruppe der zur Gewebebildung eingesetzten Filamentfäden mit der verringerten Anzahl an Filamenten ausgerüstet ist.

Tatsächlich wird hier (entweder in der Kette oder im Schuss) mit weniger als 80 Filamenten gearbeitet, wobei in der Regel im Minimum 20 Filamente oder auch 40 Filamente zum Einsatz kommen. Gleichwohl hat sich herausgestellt, dass ein solches Gewebe für den Träger und damit das hieraus hergestellte Kabelwickelband nach wie vor und unverändert in der Lage ist, zumindest die Abriebklasse E zu erreichen, d. h. wenigstens 5000 Hübe unter Berücksichtigung der zuvor wiedergegebenen Messvorschrift sowohl an dem Metalldorn mit 5 mm Durchmesser als auch an demjenigen mit 10 mm Durchmesser überstehen zu können.

Erfindungsgemäß wird auf sogenannte hybride Filamentfäden zurückgegriffen, wie dies nachfolgend noch näher erläutert wird. In diesem Fall empfiehlt sich unter Beibehaltung der Abriebklasse E, dass die Filamentfäden als Einzelfäden eine Fadenstärke von mindestens 470 dtex und im Falle von Mehrfachfilamentfäden eine kumulierte Fadenstärke von mindestens 470 dtex aufweisen. Der Begriff der hybriden Filamentfäden deutet bereits an, dass die Filamentfäden im Rahmen der Erfindung und ganz grundsätzlich materialverschieden ausgebildet sind.

Sofern an dieser Stelle beispielsweise und nicht erfindungsgemäß durchgängig auf Filamentfäden auf Polyesterbasis zurückgegriffen wird, ist entsprechend dem Vergleichsbeispiel 5 in der EP 2 157 147 B1 oder auch den Erläuterungen in der EP 1 911 633 A1 zur dortigen Probe B folgend damit zu rechnen, dass die Abriebbeständigkeit der Klasse E nach LV 312 nicht mehr erreicht wird, was jedoch dadurch kompensiert wird, dass in einem solchen Fall die Fadenstärke von mindestens 470 dtex vorgegeben wird.

Erfindungsgemäß bevorzugt ist die Variante, bei welcher die Mehrfachschuss-Filamentfäden materialverschieden ausgebildet sind. Auf den Fall der vorliegenden Erfindung übertragen bedeutet dies, dass die Mehrfachschuss-Filamentfäden auf Polyester- und Polyamidbasis hergestellt sind. Um dies im Detail zu realisieren, wird erfindungsgemäß mit den Mehrfachschuss-Filamentfäden gearbeitet. Die Filamentfäden des Mehrfachschuss-Filamentfadens können dabei jeweils eine gleiche oder voneinander verschiedene Fadenstärke aufweisen.

Dabei wird im Allgemeinen so vorgegangen und gearbeitet, dass die Mehrfachschuss-Filamentfäden materialverschieden ausgebildet sind, wohingegen die Kett-Filamentfäden oder auch Mehrfachkett-Filamentfäden jeweils materialeinheitlich ausgelegt werden. Grundsätzlich ist es natürlich aber auch möglich, dass die Mehrfachkett-Filamentfäden materialverschieden ausgelegt werden.

Die materialverschiedene Ausbildung der Mehrfachschuss-Filamentfäden empfiehlt sich insbesondere für den Fall, dass die kumulierte Fadenstärke der Schuss-Filamentfäden diejenige der Kett-Filamentfäden übersteigt. In diesem Fall bestimmen primär die Schuss-Filamentfäden die Abriebbeständigkeit des Gewebeträgers und damit des abriebfesten erfindungsgemäßen Kabelwickelbandes.

Um dies im Detail zu realisieren, bestehen erfindungsgemäß verschiedene Möglichkeiten. So sind die Mehrfachschuss-Filamentfäden als Polyester/Polyamid-Mehrfachschuss-Filamentfäden mit kombinierter oder kumulierter Fadenstärke aufgebaut. Sofern also von einer kumulierten oder kombinierten Fadenstärke die Rede ist, bedeutet dies erfindungsgemäß, dass die besagte Fadenstärke von mehreren Fäden zur Verfügung gestellt wird, beispielsweise von den zuvor angesprochenen Mehrfachschuss-Filamentfäden. Die Fäden bzw. kumulierten Fäden oder auch kombinierten Fäden werden dabei in jeweils einem gemeinsamen Fach beim Webvorgang aufgenommen. Dementsprechend verfügen die kumulierten Fäden auch über eine kumulierte Filamentanzahl bzw. eine kumulierte Anzahl an Filamenten.

Das lässt sich vermutlich darauf zurückführen, dass bei einer beispielhaft realisierten Leinwandbindung die gegenseitige Verknüpfung der Schuss-Filamentfäden sowie der Kett-Filamentfäden unter Berücksichtigung ihrer minimalen Fadenstärke von 280 dtex und trotz der gegenüber dem gattungsbildenden Stand der Technik nach der EP 2 157 147 B1 reduzierten Filamentanzahl die vorgeschriebenen 5000 Hübe im Minimum erreicht werden. Das gilt jedenfalls dann, wenn die Filamentfäden durchgängig auf Polyamidbasis hergestellt sind.

Erfindungsgemäß ist nun jedoch eine Variante, bei welcher die Filamentfäden materialverschieden ausgebildet sind. Auf den Fall der vorliegenden Erfindung übertragen bedeutet dies, dass die Filamentfäden auf Polyester- und Polyamidbasis hergestellt sind. Um dies im Detail zu realisieren, wird im Allgemeinen mit Mehrfachschuss-Filamentfäden und gegebenenfalls auch mit Mehrfachkett-Filamentfäden gearbeitet. Die Filamentfäden des Mehrfachschuss-Filamentfadens und/oder Mehrfachkett-Filamentfadens können dabei jeweils eine gleiche oder voneinander verschiedene Fadenstärke aufweisen.

Handelt es sich bei den Mehrfachschuss-Filamentfäden beispielsweise um Doppelschuss-Filamentfäden, so bedeutet dies, dass die Schuss-Filamentfäden jeweils als kombinierte Schuss-Filamentfäden aus zwei nebeneinander in ein Fach des Gewebes eingeworfenen Schussfäden aufgebaut sind, die ohne mechanische Verbindung parallel zueinander verlaufen. Dabei ist der eine Schuss-Filamentfaden dieses Doppelschuss-Filamentfadens als Polyester-Schussfaden ausgebildet, wohingegen der hierzu parallele und unabhängige weitere zweite Schuss-Filamentfaden als Polyamid-Schuss-Filamentfaden ausgebildet ist.

Neben einer solchen materialverschiedenen Ausbildung der kombinierten Filamentfäden in dem Sinne, dass in einem Fach Polyesterfäden und Polyamidfäden nebeneinander ohne mechanische Verknüpfung verlaufen oder auch mehrere solcher Polyesterfäden und Polyamidfäden in diesem Zusammenhang zum Einsatz kommen, sind auch andere Varianten denkbar. So können die Mehrfachschuss-Filamentfäden grundsätzlich auch als alternierende Mehrfachschuss-Polyester-Filamentfäden und Mehrfachschuss-Polyamid-Filamentfäden ausgebildet sein. Das gilt ganz generell auch für die kombinierten Filamentfäden. In diesem Fall wechseln sich alternierend von Fach zu Fach Polyester-Filamentfäden und Polyamid-Filamentfäden ab. Dabei können jeweils Doppel-Polyester-Filamentfäden und Doppel-Polyamid-Filamentfäden ebenso wie Mehrfach-Polyester-Filamentfäden oder auch Mehrfach-Polyamid-Filamentfäden sowie Mischformen je Fach zum Einsatz kommen und werden erfindungsgemäß mit abgedeckt.

Schließlich empfiehlt es sich, wenn der Gewebeträger einlagig ausgebildet ist, das heißt außer der zusätzlich aufgebrachten ein- oder beidseitigen Klebebeschichtung ausdrücklich keine weitere Beschichtung vorgesehen ist. Generell kann aber auch mit einem mehrlagigen Gewebeträger gearbeitet werden, der zusätzlich eine aufgebrachte Vliesschicht, eine Kunststoffbeschichtung etc. aufweisen kann.

Für den Fall, dass mit einem einlagigen Gewebeträger gearbeitet wird, verfügt das erfindungsgemäße Kabelwickelband in der Regel über eine gesamte Dicke von weniger als 0,5 mm. Außerdem ist der einlagige Träger aus dem Gewebe meistens mit einem Flächengewicht im Bereich von 130 bis 250 g/m² ausgerüstet.

Die Anzahl der gegebenenfalls gefachten Kett-Filamentfäden ebenso wie der gegebenenfalls gefachten Schuss-Filamentfäden bewegt sich typischerweise im Bereich zwischen 10 bis 60 je cm.

Die in diesem Zusammenhang eingesetzte Klebebeschichtung ist im Allgemeinen als Haftklebebeschichtung ausgebildet. Als geeigneter Haftklebstoff empfiehlt sich ein selbstklebender Klebstoff wie beispielsweise Acrylatklebstoff, wobei bevorzugt ein UV-vernetzbarer Acrylatklebstoff zum Einsatz kommt. Der Klebstoff bzw. die Klebebeschichtung wird dabei mit einem spezifischen Flächengewicht im Bereich von 50 bis 150 g/m² auf den Träger aufgetragen, wobei an dieser Stelle auf hinlänglich bekannte Beschichtungstechnologien wie eine Düsenbeschichtung, eine Beschichtung im Sinne von Curtain Coating etc. zurückgegriffen werden kann.

### Ausführungsbeispiel

In den anschließend wiedergegebenen Beispielen 1 bis 5 wird mit verschiedenen Materialien für die jeweiligen Kettfäden und Schussfäden gearbeitet. Tatsächlich kommt im Beispiel 1 und 2 (nicht erfindungsgemäß) jeweils ein Polyamidfaden (PA) als Einzelfaden sowohl zur Realisierung des Schuss-Filamentfadens als auch des Kett-Filamentfadens mit einer jeweiligen Fadenfeinheit von 470 dtex zum Einsatz. Die Beispiele 1 und 2 unterscheiden sich lediglich dahingehend, dass im Beispiel 1 die Anzahl der Filamente im Kett-Filamentfaden unterhalb von 80 Filamenten angesiedelt ist, tatsächlich mit 40 Filamenten gearbeitet wird. Gleiches gilt für den Schuss-Filamentfaden im Beispiel 2. Demgegenüber ist der jeweils andere Filamentfaden mit einer Filamentanzahl von mehr als 80 ausgerüstet, nach dem Ausführungsbeispiel mit 90 Filamenten. Gleichwohl wird in beiden Fällen die Abriebklasse F unter Anwendung der Normvorgaben entsprechend der LV 312 in der Fassung aus Februar 2008 erfüllt.

Beim Beispiel 3 (nicht erfindungsgemäß) wird erneut mit einem Einzelfaden als Kett-Filamentfaden der Fadenfeinheit 470 dtex aus Polyamid (PA) gearbeitet. Demgegenüber kommt als Schuss-Filamentfaden ein solcher mit einer kumulierten Fadenstärke von 2 x 235 dtex, also 470 dtex zum Einsatz. Das heißt, bei dem Schussfaden handelt es sich im Beispiel 3 um einen Doppelschussfaden aus jeweils zwei nicht mechanisch miteinander verbundenen Polyamid-Einzelfäden. Die Feinheit des Einzelfadens beträgt dabei jeweils 235 dtex. Die Anzahl der Filamente im Polyamid-Kettfaden bemisst sich zu 40, wohingegen für den Einzelfaden im Schuss an dieser Stelle je Faden jeweils 50 Filamente realisiert sind. Die Abriebklasse F wird nach wie vor erreicht.

Beim Beispiel 4 und 5 kommen nun materialeinheitliche Kettfäden, allerdings materialverschiedene Schussfäden zum Einsatz. Bei den Kettfäden handelt es sich jeweils um Einzelfäden aus Polyamid (PA) mit einer Fadenfeinheit von 470 dtex, wobei die Anzahl der Filamente jeweils 40 beträgt. Demgegenüber ist der Aufbau des Schussfadens bzw. des kombinierten Schussfadens im Rahmen der Beispiele 4 und 5 unterschiedlich ausgeprägt.

Beim Beispiel 4 wird mit einem Doppelschuss-Filamentfaden dergestalt gearbeitet, dass ein Einzelfaden mit einer Fadenfeinheit von 235 dtex aus Polyamid (PA) zusammen mit einem weiteren Einzelfaden der Fadenfeinheit 280 dtex aus Polyethylentheraphthalat (PET) in ein gemeinsames Fach eingeworfen wird und folglich als materialverschiedener Doppelschuss-Filamentfaden ausgebildet ist. Die Anzahl der Filamente je Faden beträgt für jeden einzelnen Faden im Beispielfall 40. Beim Beispiel 5 wird dagegen mit alternierenden Doppelschuss-Filamentfäden gearbeitet. Das heißt, hier kommt es von Fach zu Fach dazu, dass in einem Fach zwei Doppelschuss-Filamentfäden aus Polyamid (PA) der Feinheit von jeweils 235 dtex vorhanden sind, wohingegen im nächsten benachbarten Fach zwei Doppelschuss-Filamentfäden aus Polyethylentheraphthalat (PET) mit einer jeweiligen Feinheit von 280 dtex zum Einsatz kommen. Die Anzahl der Filamente je Faden beträgt erneut 40.

Anhand der anschließend die vorerwähnten Ergebnisse noch einmal zusammenfassenden Tabelle wird deutlich, dass selbst mit den materialverschiedenen Mehrfachschuss-Filamentfäden nach den Beispielen 4 und 5 zumindest die Abriebklasse E nach der LV 312 erreicht wird. Dementsprechend lassen sich vergleichbare Abriebwerte wie bei dem Stand der Technik nach der EP 2 157 147 B1 oder auch gemäß der EP 1 911 633 A1 realisieren, und zwar unter Berücksichtigung eines zugleich kostengünstigeren Aufbaus.

| | Material Kettfaden | Material Schussfaden | Filamentanzahl Kette | Filamentanzahl Schuss | Abriebklasse (LV 312) |
|---|---|---|---|---|---|
| Beispiel 1 | PA 470 dtex | PA 470 dtex | 40 | 90 | F |
| Beispiel 2 | PA 470 dtex | PA 470 dtex | 90 | 40 | F |
| Beispiel 3 | PA 470 dtex | PA | 40 | je Faden | F |
| | | 2 x 235 dtex | | 50 | |
| Beispiel 4 | PA 470 dtex | PA / PET | 40 | je Faden | E |
| | | 1 x 235 dtex PA | | 40 | |
| | | 1 x 280 dtex PET | | | |
| Beispiel 5 | PA 470 dtex | PA / PET | 40 | je Faden | E |
| | | 2 x 235 dtex PA | | 40 | |
| | | 2 x 280 dtex PET | | | |

Nachfolgend wird das abriebfeste Kabelwickelband zusätzlich noch anhand eines figürlichen Ausführungsbeispieles näher erläutert; es zeigen:
- Fig. 1: den Gewebeträger des erfindungsgemäßen Gewebebandes in einer Übersicht und
- Fig. 2: einen schematischen Schnitt durch das Kabelwickelband entsprechend der Erfindung.

In den Figuren ist ein abriebfestes Kabelwickelband zum Ummanteln von Kabeln in Automobilen dargestellt. Tatsächlich wird das Klebeband nicht einschränkend dazu eingesetzt, in einer spiral- oder wendelförmigen Bewegung um ein Kabelbündel oder einen Kabelsatz herumgeführt zu werden. Auch eine Längsummantelung des Kabelbündels oder Kabelsatzes ist generell möglich und denkbar. Dazu verfügt das Klebeband in seinem grundsätzlichen Aufbau über einen Gewebeträger 1 und eine einseitige Klebebeschichtung 2. Die Klebebeschichtung 2 ist nach dem Ausführungsbeispiel vollflächig auf den Gewebeträger 1 aufgebracht, kann allerdings auch in Streifen auf den Gewebeträger 1 aufgetragen werden.

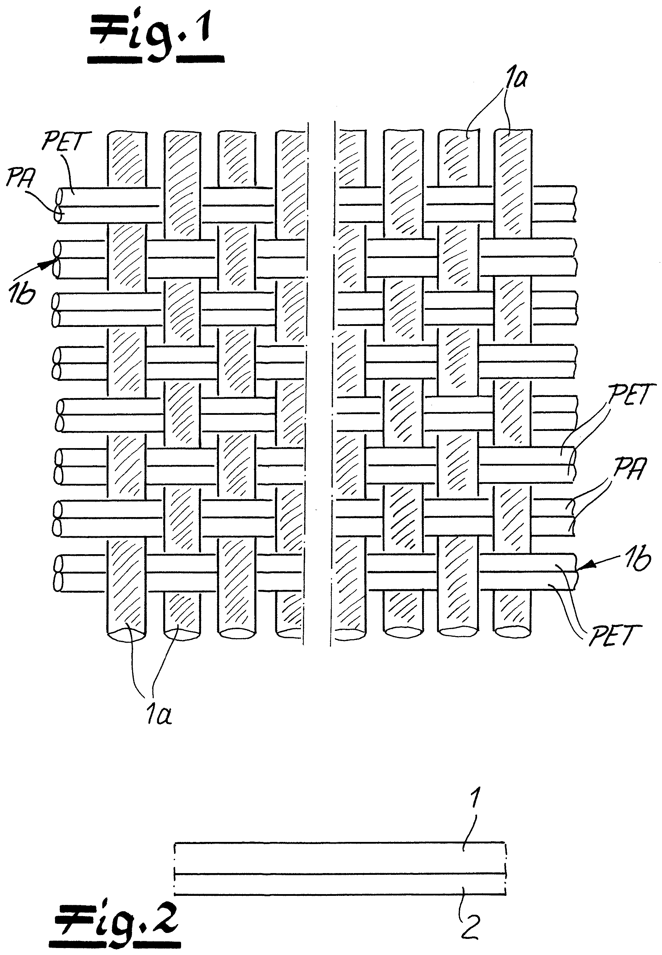

Anhand der Aufsicht in der Fig. 1 erkennt man, dass sich der Gewebeträger 1 aus Kettfäden 1a und Schussfäden 1b zusammensetzt, die nach dem Ausführungsbeispiel in einer Leinwandbindung miteinander verwebt sind. Als weitere Besonderheit kommt hinzu, dass sich der Gewebeträger 1 aus Einfachkettfäden 1a und Doppelschussfäden 1b zusammensetzt.

Sowohl bei den Einfachkettfäden 1a als auch den Doppelschussfäden 1 handelt es sich jeweils um Filamentfäden. Das heißt, die Einfachkettfäden 1a sind nach dem Ausführungsbeispiel als Einfachkett-Filamentfäden 1a ausgelegt. Bei den Doppelschussfäden 1b handelt es sich folglich um Mehrfachschuss- bzw. Doppelschuss-Filamentfäden 1b. Dadurch lässt sich das dargestellte Kabelwickelband mit einer hohen Abriebbeständigkeit einerseits und andererseits einer grundsätzlichen Handeinreißbarkeit in Querrichtung bzw. in Richtung der Doppelschussfäden 1b ausrüsten.

Nach dem Ausführungsbeispiel handelt es sich bei den Doppelschussfäden 1b bzw. den Doppelschuss-Filamentfäden 1b um jeweils materialverschiedene Filamentfäden. **In** diesem Zusammenhang sind in der Fig. 1 zwei Varianten in einem gemeinsamen Gewebe schematisch wiedergegeben. Tatsächlich besteht nämlich die Möglichkeit, dass bei den Doppelschussfäden 1b ein Einfach-Filamentfaden aus Polyamid (PA) und zusätzlich ein Einfach-Filamentfaden aus Polyethylentheraphthalat (PET) zum Einsatz kommt, die nebeneinanderlaufend und gemeinsam in ein Fach des Gewebeträgers eingeworfen sind. Wie es sich bei derartigen kombinierten Filamentfäden versteht, sind der Einfach-PA-Filamentfaden und der Einfach-PET-Filamentfaden nicht mechanisch miteinander in irgendeiner Art und Weise verbunden. Das ist im linken Teil der Fig. 1 dargestellt.

Im rechten Teil der Fig. 1 ist eine weitere Variante wiedergegeben, was lediglich schematisch zu verstehen ist und nicht in ein und demselben Gewebeträger 1 realisiert werden kann, weshalb der linke und der rechte Teil des Gewebeträgers 1 voneinander getrennt und unterschiedlich ausgebildet sind. Im rechten Teil des Gewebeträgers 1 wird nun ebenfalls mit einem materialverschiedenen Doppelschuss-Filamentfaden 1b gearbeitet, allerdings einem sogenannten alternierenden Doppelschuss-Filamentfaden 1b. Tatsächlich wird die alternierende Auslegung so realisiert, dass jeweils zwei Polyamid- bzw. PA-Einzelfäden in ein Fach eingeworfen sind und sich im nächsten Fach zwei PET-Einzelfäden und dann wieder zwei PA-Einzelfäden usw. finden und im Rahmen der Leinwandbindung miteinander verknüpft sind.

Hierbei kann grundsätzlich auch so vorgegangen werden, dass die jeweiligen Einzelfäden, also der PET-Einzelfaden ebenso wie der PA-Einzelfaden mit unterschiedlicher Fadenfeinheit mit den zugehörigen Einzel-Kettfäden 1a verwebt werden. Das ist nicht ausdrücklich dargestellt, allerdings in der Beschreibung im Detail erläutert.

## Patentansprüche

1. Abriebfestes Kabelwickelband zum Ummanteln von Kabeln in Automobilen, mit einem Gewebeträger (1), und mit einer ein- oder beidseitig auf den Gewebeträger (1) aufgebrachten Klebebeschichtung (2), wobei der Gewebeträger (1) aus Filamentfäden (1a, 1b) auf Polyester- und/oder Polyamidbasis aufgebaut ist, wobei ferner
die Filamentfäden als Einzelfäden eine Fadenstärke von mindestens 280 dtex und im Falle von Mehrfachfilamentfäden eine kumulierte Fadenstärke von mindestens 280 dtex aufweisen, wobei weiter Mehrfachschuss-Filamentfäden (1b) realisiert sind, und wobei
das Kabelwickelband wenigstens die Abriebklasse E gemäß LV312 erfüllt,
**dadurch gekennzeichnet, dass** die Mehrfachschuss-Filamentfäden (1b) materialverschieden ausgebildet sind und dass
die Mehrfachschuss-Filamentfäden (1b) als kombinierte PET/PA-Mehrfachschuss-Filamentfäden oder als alternierende Mehrfachschuss-PET-Filamentfäden und Mehrfachschuss-PA-Filamentfäden ausgebildet sind, wobei entweder die Mehrfachschuss-Filamentfäden (1b) oder die Kett-Filamentfäden (1a) aus weniger als 80 Filamenten gebildet sind.

2. Kabelwickelband nach Anspruch 1, **dadurch gekennzeichnet**, die Filamentfäden als Einzelfäden eine Fadenstärke von mindestens 470 dtex und im Falle von Mehrfach-Filamentfäden eine kumulierte Fadenstärke von mindestens 470 dtex aufweisen.

3. Kabelwickelband nach Anspruch 1 oder 2, **dadurch gekennzeichnet, dass** Mehrfachschuss-Filamentfäden (1a, 1b) und Mehrfachkett-Filamentfäden (1) realisiert sind.

4. Kabelwickelband nach Anspruch 3, **dadurch gekennzeichnet, dass** die Filamentfäden (1a, 1b) der Mehrfachschuss-Filamentfäden (1b) und/oder der Mehrfachkett-Filamentfäden(1a) eine jeweils gleiche oder voneinander verschiedene Fadenstärke aufweisen.

5. Kabelwickelband nach einem der Ansprüche 1 bis 4, **dadurch gekennzeichnet, dass** seine Dicke weniger als 0,5 mm beträgt.

6. Kabelwickelband nach einem der Ansprüche 1 bis 5, **dadurch gekennzeichnet, dass** die Anzahl der Filamentfäden im Gewebeträger (1) im Bereich von 10 bis 60 je cm angesiedelt ist.

## Claims

1. Abrasion-resistant cable wrapping tape for sheathing cables in automobiles, with a fabric carrier (1) and with an adhesive coating (2) applied to one or both sides of the fabric carrier (1), wherein
the fabric carrier (1) is made from filament threads (1a, 1b) on polyester and/or polyamide basis, wherein further
the filament threads as single threads have a linear density of at least 280 dtex and in the case of multifilament threads a cumulative linear density of at least 280 dtex, wherein further
multi-weft filament threads (1b) are created, and wherein
the cable wrapping tape satisfies at least abrasion class E according to LV 312,
**characterized in that**
the multi-weft filament threads (1b) are constructed using different materials, and that
the multi-weft filament threads (1b) are designed as combined PET/PA multi-weft filament threads or as alternating multi-weft PET filament threads and multi-weft PA filament threads, wherein
either the multi-weft filament threads (1b) or the warp filament threads (1a) are formed from fewer than 80 filaments.

2. Cable wrapping tape according to Claim 1, **characterized in that** the filament threads as single threads have a linear density of at least 470 dtex, and in the case of multiple filament threads a cumulative linear density of at least 470 dtex.

3. Cable wrapping tape according to Claim 1 or 2, **characterized in that** multi-weft filament threads (1a, 1b) and multi-warp filament threads (1) are created.

4. Cable wrapping tape according to Claim 3, **characterized in that** the filament threads (1a, 1b) of the multi-weft filament threads (1b) and/or the multi-warp filament thread (1a) have the same linear density or linear densities that are different from each other in each case.

5. Cable wrapping tape according to any one of Claims 1 to 4, **characterized in that** its thickness is less than 0.5 mm.

6. Cable wrapping tape according to any one of Claims 1 to 5, **characterized in that** the number of filament threads in the fabric carrier (1) is in the range from 10 to 60 per cm.

## Revendications

1. Bande d'enroulement de câble résistante à l'abrasion pour envelopper des câbles dans le secteur automobile, avec un support en tissu (1) et avec un revêtement adhésif (2) appliqué d'un ou des deux côtés sur le support en tissu (1), sachant que
le support en tissu (1) est constitué de fils continus (1a, 1b) à base de polyester et/ou de polyamide, sachant en plus que
les fils continus comportent en tant que fils individuels une épaisseur de fil d'au moins 280 dtex et en cas de fils continus multiples une épaisseur de fil cumulée d'au moins 280 dtex, sachant en outre que
des fils continus de trame multiples (1b) sont réalisés, et sachant que
la bande d'enroulement de câble satisfait au moins à la Catégorie d'abrasion E conformément à la norme LV312,
**caractérisée en ce que** les fils continus de trame multiples (1b) sont constitués de différents matériaux et **en ce que**
les fils continus de trame multiples (1b) sont constitués sous la forme de fils continus de trame multiples en polyéthylène (PET)/polyamide (PA) combinés ou sous la forme de fils continus de trame multiples de PET et de fils continus de trame multiples de PA alternés, sachant que
soit les fils continus de trame multiples (1b), soit les fils continus de chaîne (1a) sont formés d'au moins 80 filaments.

2. Bande d'enroulement de câble selon la revendication 1, **caractérisée en ce que** les fils continus comportent en tant que fils individuels une épaisseur de fil d'au moins 470 dtex, et en cas de fils continus multiples une épaisseur de fil cumulée d'au moins 470 dtex.

3. Bande d'enroulement de câble selon la revendication 1 ou 2, **caractérisée en ce que** des fils continus de trame multiples (1a, 1b) et des fils continus de chaîne multiples (1) sont réalisés.

4. Bande d'enroulement de câble selon la revendication 3, **caractérisée en ce que** les fils continus (1a, 1b) des fils continus de trame multiples (1b) et/ou des fils continus de chaîne multiples (1a) comportent une épaisseur de fil respectivement identique ou différente l'une de l'autre.

5. Bande d'enroulement de câble selon l'une quelconque des revendications 1 à 4, **caractérisée en ce que** son épaisseur est inférieure à 0,5 mm.

6. Bande d'enroulement de câble selon l'une quelconque des revendications 1 à 5, **caractérisée en ce que** le nombre de fils continus dans le support en tissu (1) se situe respectivement dans un ordre de 10 à 60 cm.
